# EUROPEAN PATENT APPLICATION

(11) **EP 4 707 873 A2**
(43) Date of publication of application: **11.03.2026**
(21) Application number: 24797287.0
(22) Date of filing: 25.03.2024
(51) Int. Cl.: G01T 7/00, G01T 1/16

(54) **BENDABLE RADIATION DETECTOR FOR PROVIDING IMPROVED RADIATION IMAGING**

(30) Priority: 26.04.2023 KR 20230054935
(71) Applicant: DRTECH CORP, Seongnam-Si, Gyeonggi-do 13216 (KR)
(72) Inventor: MOON, Beom Jin, Suwon-si Gyeonggi-do 16707 (KR); KIM, Hyeong Sik, Hwaseong-si Gyeonggi-do 18489 (KR); SHIM, Hyun Sup, Hwaseong-si Gyeonggi-do 18436 (KR); GIL, Yong Cheol, Suwon-si Gyeonggi-do 16571 (KR); KIM, Ki Beom, Seongnam-si Gyeonggi-do 13601 (KR)
(74) Representative: Jung, Minkyu
(86) International application number: PCT/KR2024/003705
(87) International publication number: WO 2024/225625

(57) **Abstract**

The present disclosure relates to a radiation detector which is bendable, detects radiation, and has a waterproof structure, and the radiation detector includes a main plate which supports a radiation detection panel and has a conductive plate shape, the radiation detection panel of which at least a portion is bonded to at least a portion of a front surface of the main plate and which detects radiation incident onto a front surface of the radiation detection panel, a conductive gasket attached to at least a portion of the front surface of the main plate, disposed along a side surface of the radiation detection panel, and electrically coupled to the main plate, and a front plate bonded to a front surface of the conductive gasket, electrically coupled to the conductive gasket, and covering the front surface of the radiation detection panel, wherein the main plate, the radiation detection panel, the conductive gasket, and the front plate are flexible.

## Description

### [Technical Field]

The present disclosure relates to a bendable radiation detector for providing an improved radiation image. More specifically, a radiation detector provides an improved radiation image in which noise in a signal generated inside the radiation detector is minimized.

### [Background Art]

A bendable radiation detector is a relatively recent development in the field of radiographic imaging. Although the idea of bendable radiation detectors has been around for decades, recent advances in materials science and engineering have led to intensive research and development of radiation detectors that have both flexibility and a waterproof function.

Recently, researchers and developers have been focusing on the development of radiation detectors. Conventional bendable radiation detectors may have lower sensitivity to radiation than general radiation detectors. This is because bendable radiation detectors may use thinner and more flexible materials, and these materials may be less sensitive to radiation than materials used in general flat radiation detectors.

In addition, conventional bendable radiation detectors have sometimes exhibited image distortion as compared to general radiation detectors. This is because various structures for bending and short-circuit possibilities make it difficult to secure sufficient grounding.

In addition, since bendable radiation detectors have complex electronic circuits and various hardware structures to provide bendability, there has been a problem that the difficulty of manufacturing is increased.

For the above reasons, it has been very difficult to develop a bendable radiation detector that can be used in harsh environments by applying waterproof functions.

### [Detailed Description of Invention]

### [Technical Problem]

The present disclosure relates to a bendable radiation detector for providing an improved radiation image. A radiation detector provides an improved radiation image while preventing foreign materials from penetrating into the radiation detector.

However, technical objects are not limited to the technical objects described above, and other technical objects may also exist.

### [Technical Solution]

According to a present disclosure, a radiation detector, which is bendable, detects radiation, and has a waterproof structure, includes a main plate which supports a radiation detection panel and has a conductive plate shape, the radiation detection panel of which at least a portion is bonded to at least a portion of a front surface of the main plate and which detects radiation incident onto a front surface of the radiation detection panel, a conductive gasket attached to at least a portion of the front surface of the main plate, disposed along a side surface of the radiation detection panel, and electrically coupled to the main plate, and a front plate bonded to a front surface of the conductive gasket, electrically coupled to the conductive gasket, and covering the front surface of the radiation detection panel, wherein the main plate, the radiation detection panel, the conductive gasket, and the front plate are flexible.

The main plate according to the radiation detector according to the present disclosure may include a cable through-hole which is a connection path for a detector cable to connect the radiation detection panel and the control board, a control board bracket coupling the control board may be coupled to a rear surface of the main plate, one end portion of the detector cable may be coupled to the radiation detection panel, the detector cable may pass through the cable through-hole, and the other end portion of the detector cable may be coupled to a control board accommodated inside the control board bracket.

The radiation detector according to the present disclosure may include a rear elastic jacket which has elasticity and covers at least one of at least a portion of the rear surface of the main plate, at least a portion of a side surface of the main plate, a side surface of the conductive gasket, a side surface of the front plate, and the control board bracket.

The radiation detector according to the present disclosure may include a side elastic jacket formed along a side protrusion of the rear elastic jacket to cover the side protrusion formed on a side surface of the rear elastic jacket, and an inner surface of the side elastic jacket may include a side protection recess for inserting the side protrusion.

The side elastic jacket of the radiation detector according to the present disclosure may include front recesses, into which a front base bracket is inserted, formed in a front surface of the side elastic jacket, and a rear recess, into which a rear base bracket is inserted, formed in a rear surface of the side elastic jacket, the front base bracket may be inserted into the front recess, the rear base bracket may be inserted into the rear recess, and at least one of the front base bracket, the side elastic jacket, the front plate, the conductive gasket, the main plate, the rear elastic jacket, and the rear base bracket may be screw-connected.

The radiation detector according to the present disclosure may include a rear base module located on a rear surface of the rear elastic jacket and protecting the control board inside the control board bracket, and at least one of the front base bracket, the side elastic jacket, the conductive gasket, the rear elastic jacket, and the rear base module may be screw-connected.

The front base bracket according to the present disclosure may include a left front base bracket coupled to a left side of the front surface of the side elastic jacket and having a "C" shape, a right front base bracket coupled to a right side of the front surface of the side elastic jacket and having a laterally inverted "C" shape, and a plurality of central front base brackets coupled to the front surface of the side elastic jacket and located between the left front base bracket and the right front base bracket.

The left front base bracket, the right front base bracket, and the plurality of central front base brackets according to the present disclosure may be inserted into the front recesses, and at least one bending groove extending vertically may be formed between the plurality of front recesses in a central region corresponding to the plurality of central front base brackets.

The rear elastic jacket according to the present disclosure may include a control board accommodation portion which has a concave shape and accommodates and protects the control board bracket, and a side protrusion formed along an edge of the rear elastic jacket to protect at least a portion of the side surface of the main plate, the side surface of the conductive gasket, and the side surface of the front plate.

The rear elastic jacket and the side elastic jacket according to the present disclosure may each have a thickness of 0.5 T to 3.0 T.

The side elastic jacket according to the present disclosure may be formed integrally and may include at least one of a front cover and a rear cover, and the side elastic jacket including the at least one of the front cover and the rear cover may prevent foreign materials from being introduced through at least one of a front surface and a rear surface of the side elastic jacket.

In addition, a program for implementing an operation method of a radiation detector of the present disclosure may be recorded on a computer-readable recording medium.

### [Advantageous Effects]

In a radiation detector of the present disclosure, since a structure for waterproofing is combined to a structure capable of securing grounding, the electrical stability of a control board can be achieved, and the quality of a radiation image can be improved. In addition, since a radiation detector can be bendable and can provide waterproofing, the radiation detector can operate without problems even in harsh environments.

However, the effects of the radiation detector of the present disclosure are not limited to the above effects.

### [Description of Drawings]

FIG. 1 is a view illustrating a radiation detector according to one embodiment of the present disclosure.
FIG. 2 is a view illustrating a radiation detector according to one embodiment of the present disclosure.
FIG. 3 is a view illustrating a part of a bending support (120) according to one embodiment of the present disclosure.
FIG. 4 illustrates a main plate according to one embodiment of the present disclosure.
FIG. 5 is a view illustrating a part of the radiation detector according to one embodiment of the present disclosure.
FIG. 6 is a cross-sectional view of a part of the radiation detector according to one embodiment of the present disclosure.
FIG. 7 illustrates a part of the radiation detector according to one embodiment of the present disclosure.
FIG. 8 illustrates a side elastic jacket according to one embodiment of the present disclosure.
FIG. 9 illustrates a cross section of a part of the radiation detector according to one embodiment of the present disclosure.
FIG. 10 is a view for describing the radiation detector according to one embodiment of the present disclosure.
FIG. 11 is a cross-sectional view of the radiation detector according to one embodiment of the present disclosure.
FIG. 12 is a cross-sectional view of the radiation detector according to one embodiment of the present disclosure.
FIG. 13 is a view illustrating a side elastic jacket according to one embodiment of the present disclosure.

### [Modes of the Invention]

The advantages and features of the disclosed embodiments and methods for achieving the same will become apparent from the following description of the embodiments, taken in conjunction with the accompanying drawings. However, the present disclosure is not limited to the embodiments disclosed below herein but will be implemented in various forms, The embodiments are provided so that the present disclosure is completely disclosed, and a person of ordinary skilled in the art can fully understand the scope of the present disclosure.

Terms used herein will be described in brief, and then the disclosed embodiments will be described in detail.

The terms used herein have been selected as general terms which are widely used at present in consideration of the functions of the present disclosure, and this may be altered according to the intent of an operator skilled in the art, conventional practice, or introduction of new technology. Also, in a specific case, a term is arbitrarily selected by the applicant, and the meaning of the term will be described in detail in a corresponding description portion of the present disclosure. Therefore, the terms used herein should be defined based on the overall content of the present disclosure instead of a simple name of each of the terms.

As used herein, the singular forms "a" and "an" are intended to include the plural forms as well, unless the context clearly indicates the singular form. Further, the plural forms are intended to include the singular forms as well, unless the context clearly indicates the plural forms.

Throughout the specification, unless explicitly described to the contrary, the word "include" and variations such as "comprise" or "comprising" will be understood to imply the inclusion of stated elements but not the exclusion of any other elements.

Further, the term "unit" used herein refers to a software or hardware component, and the "unit" performs certain roles. However, the "unit" is not limited to software or hardware. The "unit" may be formed to be in an addressable storage medium or may be formed to operate one or more processors. Thus, as an example, the term "unit" includes components such as software components, object-oriented software components, class components, and task components, processes, functions, attributes, procedures, subroutines, segments of program code, drivers, firmware, micro-codes, circuits, data, a database, data structures, tables, arrays, and variables. Functions provided in the components and the "units" may be combined into a smaller number of components and "units," or further divided into additional components and "units."

According to one embodiment of the present disclosure, the "unit" may be implemented as a processor and memory. For example, the "processor" should be interpreted broadly to include a general-purpose processor, a central processing unit (CPU), a microprocessor, a digital signal processor (DSP), a controller, a microcontroller, a state machine, or the like. In some environments, the "processor" may also refer to an application-specific integrated circuit (ASIC), a programmable logic device (PLD), a field-programmable gate array (FPGA), or the like. The term "processor" may also refer, for example, to a combination of processing devices such as a combination of a DSP and a microprocessor, a combination of a plurality of microprocessors, a combination of one or more microprocessors in conjunction with a DSP core, or any other combination of such components.

The term "memory" should be interpreted broadly to include any electronic component capable of storing electronic information. The term "memory" may also refer to various types of processor-readable media such as a random access memory (RAM), a read-only memory (ROM), a non-volatile random access memory (NVRAM), a programmable read-only memory (PROM), an erasable-programmable read-only memory (EPROM), an electrically erasable PROM (EEPROM), a flash memory, a magnetic or optical data storage, and registers. The memory is said to be in electronic communication with the processor when the processor can read information from the memory and/or write information to the memory. The memory integrated into the processor is in electronic communication with the processor.

Hereinafter, embodiments will be described in detail with reference to the accompanying drawings so that those skilled in the art may easily practice the present disclosure. In order to clearly describe the present disclosure with reference in the drawings, parts that are not related to the description are omitted.

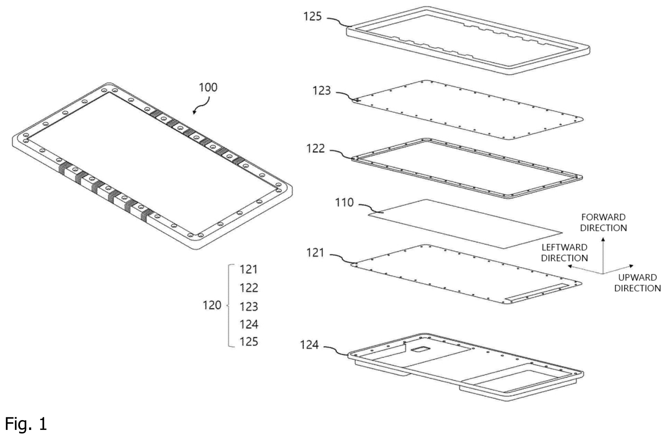

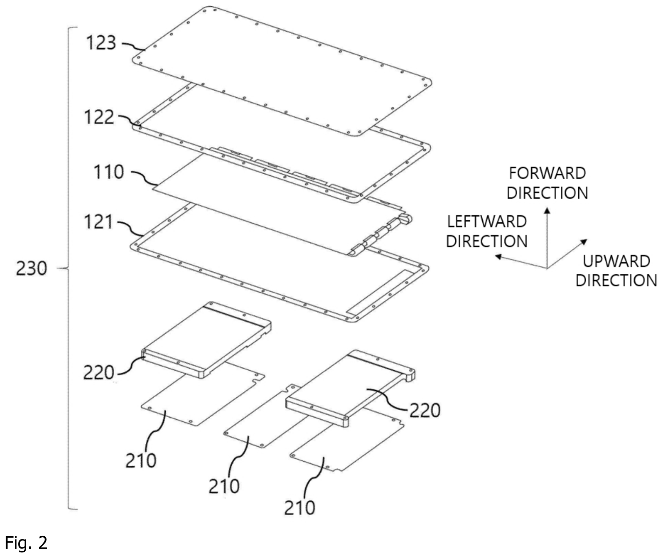

FIG. 1 is a view illustrating a radiation detector according to one embodiment of the present disclosure. FIG. 2 is a view illustrating a radiation detector according to one embodiment of the present disclosure.

Hereinafter, the radiation detector will be described with reference to FIGS. 1 and 2. FIG. 1 is a view in which a control board 210 and a control board bracket 220 are omitted for convenience of description. FIG. 2 is a view in which a rear elastic jacket 124 and a side elastic jacket 125 are omitted for convenience of description.

A radiation detector 100 of the present disclosure may be a bendable device that has a waterproof structure and detects radiation. First, the radiation detector 100 may detect radiation emitted from a radiation source and transmitted through a subject. Radiation may include at least one of x-rays, gamma rays, and some ultraviolet rays. The radiation detector 100 may detect radiation to acquire a radiation image of a subject. For example, the radiation image acquired by the radiation detector 100 may include at least one of an X-ray image and a computed tomography (CT) image. The radiation detector 100 of the present disclosure may include a bending support 120 to provide a waterproof function and may be bendable. The bending support 120 will be described in detail below.

The radiation detector 100 may include a radiation detection panel 110. According to a method of acquiring an electrical signal, radiation detection panels may be classified as an indirect conversion type that obtains an indirect electrical signal from visible light using a scintillator or a direct conversion type that obtains a direct electrical signal from radiation using photoconductors. According to a type of an element that generates an electrical signal, the radiation detection panels may be classified as a charge-coupled device (CCD) type that uses a charge-coupled device, a complementary metal-oxide semiconductor (CMOS) type that uses a crystalline silicon CMOS element, or an a-Si type that uses an amorphous silicon thin film transistor (TFT) substrate.

The radiation detector 100 including the radiation detection panel 110 may include various sensors to implement digital image data using an electrical signal of the sensor proportional to an amount of incident radiation, and position information. The radiation detector 100 may obtain near-real-time imaging results and may secure high resolution and a wide dynamic range with relatively low radiation. In addition, due to the characteristics of digital data, it is easy to store and process imaging results. The radiation detector 100 includes a readout signal unit that reads an electrical signal output from a pixel array, and a gate driver that turns on a switching element such that the readout signal unit may read the electrical signal. The electrical signal detected by the readout signal unit is converted into an image signal through a predetermined processing process in a controller or the like provided on a main board and then transmitted to a display device for displaying an X-ray image.

The radiation detection panel 110 may extend in a first direction. The first direction may be a leftward direction. However, the present disclosure is not limited thereto, and the first direction may be a rightward direction. The radiation detection panel 110 may detect radiation incident onto a first surface. Here, the first surface may be a front surface (front side) of the radiation detection panel 110. The radiation detection panel 110 may be flexible. That is, the radiation detection panel may be flexible to be bendable. When a surface of a subject is a rounded surface, the radiation detection panel 110 may be bent to be in close contact with the surface of the subject. Since the radiation detection panel 110 is located in close contact with the surface of the subject, the sharpness of a radiation image can be improved.

The radiation detector 100 may include the bending support 120. The bending support 120 may be in contact with at least one of the first surface of the radiation detection panel 110, a second surface opposite the first surface, and a third surface excluding the first surface and the second surface. The second surface may be a rear surface of the radiation detection panel 110. The third surface may be a side surface of the radiation detection panel. For example, the third surface may include at least one of an upper surface, a left surface, a right surface, and a lower surface.

The bending support 120 may be a component for protecting the radiation detection panel 110. The radiation detection panel 110 may be a sensitive part and thus may be easily damaged by an external impact, and the quality of a radiation image may be degraded by external stimuli. In addition, even when external materials are introduced into the radiation detection panel 110, the quality of a radiation image may be degraded, or components included in the radiation detector 100 may be damaged. The bending support 120 may prevent circuits included in the radiation detector 100 and the radiation detection panel 110 from being damaged by an external impact, may alleviate an external impact, and may prevent external materials from being introduced into the radiation detector 100.

In addition, the bending support 120 may support the radiation detection panel 110. As described above, since the radiation detection panel 110 is flexible to be bendable, when the bending support 120 is not present, it may be difficult to keep the radiation detection panel 110 steady against a subject. This is because the radiation detection panel 110 will be easily deformed by the movement of a subject or an external force. Therefore, the bending support 120 may be a component for supporting the radiation detection panel 110, which is bent, to maintain a predetermined shape. The bending support 120 may adjust bending of the radiation detection panel 110 about a bending axis parallel to the second direction that intersects the first direction. That is, as the bending support 120 is bent, the radiation detection panel 110 may also be bent. Here, the second direction may be an upward direction. However, the present disclosure is not limited thereto, and the second direction may be a downward direction.

The bending support 120 may include various components for the operation of the radiation detector 100. For example, for the operation of the radiation detector 100, the bending support 120 may include at least one of a controller, a communicator, an inputter, and an outputter. For example, the bending support 120 may include the control board 210, and the control board 210 may include at least one of a controller, a communicator, an inputter, and an outputter. The control board is shown in FIG. 2. In addition, as shown in FIGS. 1 and 2, the radiation detection panel 110 may be embedded in the bending support 120. However, the present disclosure is not limited thereto.

The bending support 120 may include at least one of a main plate 121, a conductive gasket 122, a front plate 123, the rear elastic jacket 124, and the side elastic jacket 125.

Hereinafter, the components included in the bending support 120 will be described in detail.

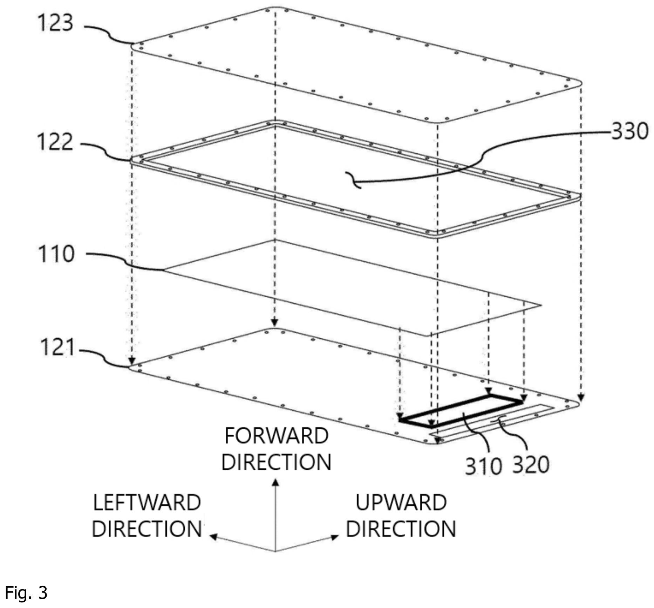

FIG. 3 is a view illustrating a part of the bending support 120 according to one embodiment of the present disclosure.

The radiation detector 100 may include the main plate 121. The main plate 121 may support the radiation detection panel 110. In addition, the main plate 121 may have a plate shape. Therefore, the flexible radiation detection panel 110 may maintain a shape of a plate. Since the main plate 121 is also flexible, the main plate 121 may be bent together with the radiation detection panel 110. Although the main plate 121 may have the plate shape, a through-hole 320, through which a cable for connecting the radiation detection panel 110 and the control board 210 passes, may be formed in at least a portion of the main plate 121.

The main plate 121 may be a thin plate made of a composite material in which one or more of carbon, stainless steel, copper, and carbon tool steel are mixed. Carbon tool steel that can be used for the main plate 121 may be one of SK1, SK2, SK3, SK4, SK5, SK6, and SK7. In order to increase the surface hardness of the main plate 121, post-treatment may be performed on the above material. For example, heat treatment, physical vapor deposition (PVD), diamond-like coating (DLC), or the like may be performed on the material. By using the above material, the main plate 121 may return to its original state while maintaining bendability.

In addition, the main plate 121 may be conductive. In addition, the main plate 121 may be electrically coupled to the control board 210. More specifically, the main plate 121 may be electrically coupled to a ground of the control board 210 to compensate for an insufficient ground area of the control board 210. Noise of a radiation image may be significantly reduced by the ground area of the main plate 121.

The main plate 121 may be located on a surface of the radiation detection panel 110 opposite to the third direction. The third direction may be a forward direction. That is, the surface of the radiation detection panel 110 opposite to the third direction may be the rear surface of the radiation detection panel 110. That is, the radiation detection panel 110 may be located on a front surface of the main plate 121.

At least a portion of the radiation detection panel 110 may be attached to at least a portion of the front surface of the main plate 121. An adhesive surface 310 may be located in an area of the front surface of the main plate 121 which is biased toward a direction opposite to the first direction. However, the present disclosure is not limited thereto, and the adhesive surface 310 may be located in an area of the front surface of the main plate 121 which is biased toward the first direction. In addition, the adhesive surface 310 may be located in at least one of an area biased toward the second direction and an area biased toward a direction opposite to the second direction in the front surface of the main plate 121.

The adhesive surface 310 of the main plate 121 may be bonded to at least a portion of the rear surface of the radiation detection panel 110 using an adhesive. As the adhesive, double-sided tape, glue, Velcro, silicone, or the like may be used. According to various embodiments of the present disclosure, a hardware coupling structure may be formed on the adhesive surface 310 so that the adhesive surface 310 may be coupled to the radiation detection panel 110 hardware-wise. Since the adhesive surface 310 is located in the area of the main plate 121 inclined toward the first direction or the area inclined in the direction opposite to the first direction, one side of the main plate 121 may be coupled to one side of the radiation detection panel 110. That is, one side of the radiation detection panel 110 may be fixed to the main plate 121. In addition, since the other side of the radiation detection panel 110 is not coupled to the main plate 121, when the radiation detector 100 is bent, the other side of the radiation detection panel 110 may move with respect to the main plate 121. That is, since the adhesive surface 310 is biased to one side, the main plate 121 and the radiation detection panel 110 may allow the radiation detector 100 to provide bending. In addition, when the radiation detector 100 is bent, the radiation detection panel 110 may not be damaged by the main plate 121.

A detection panel guide (not shown) may be formed on the main plate 121. The detection panel guide may extend laterally and may be formed on at least a portion of an upper side and a lower side of the main plate 121. The detection panel guide may have a "C" shape or a laterally inverted "C" shape to surround at least a portion of at least one of the upper surface and the lower surface of the radiation detection panel 110. The detection panel guide may serve as a moving path of the radiation detection panel 110 when the radiation detector 100 is bent. Even when the radiation detector 100 repeatedly bends and unfolds by to the detection panel guide, the radiation detection panel 110 may always bend and unfold in the same shape. Therefore, the radiation detector 100 may always obtain a uniform radiation image.

According to various embodiments of the present disclosure, the adhesive surface 310 may be located in a central portion of the main plate 121, unlike that shown in FIG. 3. In this case, a central portion of the radiation detection panel 110 may be fixed to the main plate 121. In addition, when the radiation detector 100 bends, while one side and the other side of the radiation detection panel 110 may move with respect to the main plate 121, the radiation detector 100 may be bendable.

The main plate 121 may include the through-hole 320 for a cable. The through-hole 320 for a cable may be a connection path for a detector cable to connect the radiation detection panel 110 and the control board 210. The control board 210 may be located on a rear surface of the main plate 121. A rearward direction is a direction opposite to the third direction.

Referring to FIG. 3 together with FIG. 2, the control board bracket 220 for coupling the control board 210 may be attached to the rear surface of the main plate 121. A space for storing and fixing the control board 210 may be formed in the control board bracket 220. The control board bracket 220 may be fixed to the main plate 121 through screws. In addition, the control board 210 may be fixed to the control board bracket 220 through screws.

The control board 210 may be electrically coupled to the radiation detection panel 110 through a detector cable. In the radiation detector, one end portion of the detector cable is coupled to the radiation detection panel 110, the detector cable passes through the through-hole 320 for a cable, and the other end portion of the detector cable is coupled to the control board 210 accommodated inside the control board bracket 220.

The control board 210 may transmit or receive a signal to or from the radiation detection panel 110. In addition, a ground line of the control board 210 may be electrically coupled to at least one of the control board bracket 220 and the main plate 121. That is, a ground area of the control board 210 may be expanded, and noise of a radiation image may be significantly reduced.

Referring again to FIG. 3, the radiation detector 100 may include the conductive gasket 122. The conductive gasket 122 may be attached to at least a portion of the front surface of the main plate 121. The conductive gasket 122 may be disposed along the side surface of the radiation detection panel 110. A side surface may be a surface excluding a front surface and a rear surface of the conductive gasket 122. For example, the side surface may be an upper surface, a left surface, a right surface, or a lower surface. The conductive gasket 122 may be formed along an outer peripheral portion (edge) of the main plate 121. The entire rear surface (back surface) of the conductive gasket 122 may be in surface contact with the main plate 121. However, the present disclosure is not limited thereto, and at least a portion of the conductive gasket 122 may be in contact with at least a portion of the outer peripheral portion of the main plate 121.

The conductive gasket 122 may be made of a material that is conductive and flexible to be bendable. For example, the conductive gasket 122 may be made of a conductive silicone material. For example, the conductive gasket 122 may be implemented using silicone (nitrile butadiene rubber (NBR), ethylene propylene diene monomer rubber (EPDM), or the like).

A panel accommodation hole 330 for accommodating the radiation detection panel 110 may be formed in a central portion of the conductive gasket 122. The conductive gasket 122 may have a closed curve shape, but the present disclosure is not limited thereto. The radiation detection panel 110 may be accommodated in the panel accommodation hole 330 of the conductive gasket 122 so that the conductive gasket 122 may surround the radiation detection panel 110. The conductive gasket 122 may not be in contact with the radiation detection panel 110. The conductive gasket 122 may not be coupled to the radiation detection panel 110. An area in which the radiation detection panel 110 is coupled to the main plate 121 may not overlap an area in which the conductive gasket 122 is coupled to the main plate 121. However, the present disclosure is not limited thereto, and the conductive gasket 122 may also be in contact with or coupled to the radiation detection panel 110.

The conductive gasket 122 may be electrically coupled to the main plate 121. As described above, the main plate 121 may serve to expand the ground area of the control board 210. The conductive gasket 122 may also be coupled to the main plate 121 to serve to expand the ground area. As described above, since the ground area is expanded, noise of a radiation image can be reduced.

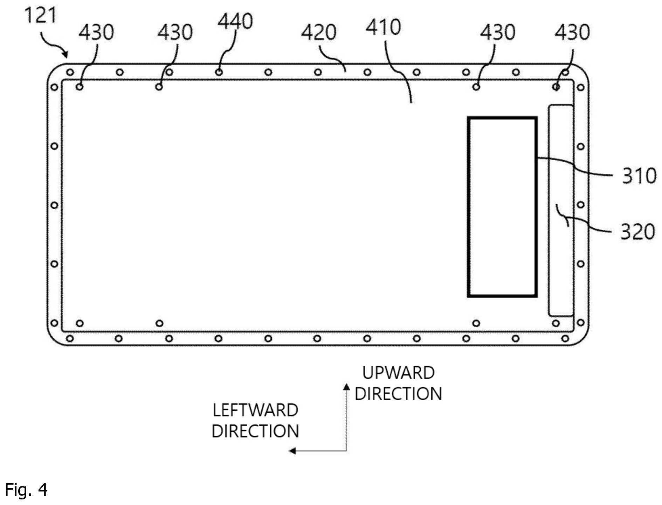

The conductive gasket 122 may be coupled to the front surface of the main plate 121. Both the conductive gasket 122 and the radiation detection panel 110 may be coupled to the front surface of the main plate 121. In addition, the entire rear surface of the conductive gasket 122 may be bonded to the main plate 121. However, the present disclosure is not limited thereto, and at least a portion of the rear surface of the conductive gasket 122 may be bonded to at least a portion of the main plate 121. The conductive gasket 122 may be welded to the main plate 121 or coupled thereto using conductive double-sided tape or a conductive adhesive. However, the present disclosure is not limited thereto, and the conductive gasket 122 may be coupled to the main plate 121 through a hardware structure. For example, the conductive gasket 122 may be screw-coupled to the main plate 121. In order for the main plate 121 to be electrically coupled to the conductive gasket 122, treatment for increasing conductivity may be performed on a portion of the main plate 121 which is coupled to the conductive gasket 122. For example, laser delamination treatment may be performed on the portion of the main plate 121 which is coupled to the conductive gasket 122. For a description of the main plate 121, reference is now made to FIG. 4.

FIG. 4 illustrates the main plate according to one embodiment of the present disclosure.

Referring to FIG. 4, the main plate 121 may include a untreated de-membrane portion 410 and a treated de-membrane portion 420. The untreated de-membrane portion 410 may be in contact with the radiation detection panel 110. In addition, the adhesive surface 310 may be formed on at least a portion of the untreated de-membrane portion 410. Therefore, at least a portion of the untreated de-membrane portion 410 may be bonded to the radiation detection panel 110.

The treated de-membrane portion 420 of the main plate 121 may be a portion for coupling with the conductive gasket 122. Treatment for increasing conductivity may be performed on the treated de-membrane portion 420. Therefore, the main plate 121 may be electrically coupled to the conductive gasket 122 at low resistance.

A bracket coupling hole 430 for coupling with the control board bracket 220 may be formed in the untreated de-membrane portion 410 of the main plate 121. In addition, a screw-coupling hole 440 for screw-coupling with at least one of the conductive gasket 122 and the front plate 123 may be formed in the treated de-membrane portion 420 of the main plate 121. One or more of the main plate 121, the conductive gasket 122, and the front plate 123 may be electrically coupled to each other through an electrically conductive screw.

The main plate 121 may be formed integrally. That is, the main plate 121 may have the shape of a single panel rather than a combination of various components. For example, the main plate 121 may be manufactured by cutting or folding a single plate made of a preset material. However, the present disclosure is not limited thereto.

Referring again to FIG. 3, the radiation detector 100 may include the front plate 123. The front plate 123 may be bonded to a front surface of the conductive gasket 122. The entire front surface of the conductive gasket 122 may be bonded to the front plate 123. However, the present disclosure is not limited thereto, and at least a portion of the front surface of the conductive gasket 122 may be bonded to at least a portion of the front plate 123. The conductive gasket 122 may be welded to the front plate 123 or coupled thereto using conductive double-sided tape or a conductive adhesive. However, the present disclosure is not limited thereto, and the conductive gasket 122 may be coupled to the front plate 123 through a hardware structure. For example, the conductive gasket 122 may be screw-coupled to the front plate 123.

The front plate 123 may be electrically coupled to the conductive gasket 122. In order for the front plate 123 to be electrically coupled to the conductive gasket 122, treatment for increasing conductivity may be performed on a portion of the front plate 123 which is coupled to the conductive gasket 122. For example, laser delamination treatment may be performed on the portion of the front plate 123 which is coupled to the conductive gasket 122. The conductive gasket 122 may be electrically coupled to the front plate 123. As described above, the main plate 121 may serve to expand the ground area of the control board 210. The front plate 123 may be coupled to the main plate 121 through the conductive gasket 122 to also serve to expand the ground area.

As described above, since the ground area is expanded, noise of a radiation image can be reduced. More specifically, there are cases in which an overcurrent or leakage current is generated in the control board 210, and in the case of the radiation detector 100, noise may occur in an image due to a current emitted from at least one of the radiation detection panel 110 and the control board 210. In addition, due to an emitted current, an overheating phenomenon may occur in some chip materials of the control board 210. In the radiation detector 100 of the present disclosure, by using the front plate 123, the conductive gasket 122, and the main plate 121, grounding can be secured at portions that obstruct voltage flow, and a current can be allowed to flow to corresponding areas, thereby preventing overheating of the radiation detector 100 and outputting high-quality radiation images.

The front plate 123 may cover the front surface of the radiation detection panel 110. The rear surface of the radiation detection panel 110 may be covered by the main plate 121, the side surface of the radiation detection panel may be surrounded by the conductive gasket 122, and the front surface of the radiation detection panel 110 may be covered by the front plate 123. That is, the radiation detection panel 110 may be sealed by the main plate 121, the conductive gasket 122, and the front plate 123. Of course, there is the through-hole 320 for a cable in the main plate 121, but at least a portion of the through-hole for a cable may be covered by the control board bracket 220. An adhesive for waterproofing may be used to couple the main plate 121, the conductive gasket 122, the front plate 123, and the control board bracket 220. In this way, the radiation detection panel 110 may be surrounded by at least one of the main plate 121, the conductive gasket 122, the front plate 123, and the control board bracket 220, thereby implementing a primary waterproof structure for the radiation detector 100.

As described above, at least a portion of the radiation detection panel 110 may be coupled to the adhesive surface 310 of the main plate 121. Only a portion of the radiation detection panel 110 may be fixed to the main plate 121, and the remaining portion thereof may be moved freely inside a space formed by the main plate 121, the conductive gasket 122, the front plate 123, and the control board bracket 220. Therefore, the radiation detector 100 may be bent without applying a large force to the radiation detection panel 110, and the radiation detection panel 110 may be located in a fixed area inside the radiation detector 100. In addition, even when the radiation detector 100 is repeatedly bent and unfolded, the radiation detection panel 110 can always be bent or unfolded in the same shape inside the space formed by the main plate 121, the conductive gasket 122, the front plate 123, and the control board bracket 220. Therefore, the radiation detector 100 can always obtain a uniform radiation image, and a user can easily acquire a desired radiation image.

The front plate 123 may be flexible. Accordingly, the front plate 123 may also be bent as the radiation detection panel 110 is bent.

The front plate 123 may be located on the radiation detection panel 110 in the third direction to protect the radiation detection panel 110. Here, the third direction may be a forward direction. The front plate 123 may have a larger area than the radiation detection panel 110 to cover the radiation detection panel 110. The front plate 123 may not be fixed to the radiation detection panel 110. In addition, since the front plate 123 is coupled to the flexible conductive gasket 122, the front plate 123 may flexibly respond to the bending motion of the radiation detector 100. In addition, even when the radiation detector 100 is bent by the flexible conductive gasket 122, the front plate 123 may not be separated from the conductive gasket 122. In addition, even when the radiation detector 100 is bent or unfolded by the flexible conductive gasket 122, the front plate 123 may not be separated from the main plate 121.

Since the front plate 123 is not directly coupled to the radiation detection panel 110, the front plate 123 may protect the radiation detection panel 110 and prevent damage to the radiation detection panel 110.

In addition, the front plate 123 may be formed integrally. That is, the front plate 123 may have the shape of a single panel rather than a combination of various components. For example, the front plate 123 may be manufactured by cutting or folding a single plate made of a preset material. However, the present disclosure is not limited thereto.

Although not shown in FIGS. 1 to 3, a front protection portion (not shown) for protecting the front plate 123 may be provided in front of the front plate 123. The front protection portion may be detached from the radiation detector. Since the front plate 123 is fixed to the radiation detector 100, when the front plate 123 is damaged, there is a burden of having to replace the radiation detector 100. In particular, when a subject is a rough object or the radiation detector 100 is used in a harsh environment, since the front plate 123 is more likely to be scratched, a cycle at which the radiation detector 100 should be replaced may become shorter. In the radiation detector 100 of the present disclosure, the replaceable front protection portion may come into contact with or approach a subject instead of the radiation front plate 123. Therefore, scratches will occur on the front protection portion rather than the front plate 123, and a user may easily maintain the radiation detector 100 simply by replacing the front protection portion. In addition, when there is an attachable/detachable front protection portion, both of the attachable/detachable front protection and the front plate 123 may doubly protect the radiation detection panel 110. That is, since the radiation detector 100 of the present disclosure includes the attachable/detachable front protection, the durability of the radiation detector 100 can be further increased.

The front plate 123 may have a thickness of 0.1 T to 1 T. In addition, a material of the front plate 123 may be a material that transmits radiation. In addition, since the material of the front plate 123 is a resilient material, the front plate 123 may return to its original state even when bent by an external force. When the thickness of the front plate 123 exceeds 1.0 T, since transmittance and yield strength decrease, the bendable radiation detector 100 may be difficult to use, and the quality of a radiation image may be degraded. In addition, when the thickness of the front plate 123 is 0.1 T or less, the front plate 123 may not only fail to function as a protection portion, but the durability thereof may also decrease. The front plate 123 may have a transmittance of 85% or more. In addition, when the transmittance of the front plate 123 is less than 85%, high-energy band radiation should be radiated to acquire a radiation image, which may adversely affect the control board 210 provided in a detector and increase radiation exposure to a subject. When the front plate 123 with a thickness of 1 T or more is used to protect the control board 210 from excessive energy exposure, there may be a problem that the front plate 123 is damaged or is not restored during bending. In addition, the front plate 123 may have a yield strength of 20 MPa to 30 MPa. For example, the yield strength of the front plate 123 may also be 23 MPa. The front plate 123 having such physical properties maintains appropriate elasticity during bending and enables repeated bending and flattening motions without affecting the radiation detection panel 110 and the control board 210 of the radiation detector 100.

A material of the front plate 123 may be at least one of a stainless steel sheet material, a copper sheet material, and carbon tool steel. However, the present disclosure is not limited thereto, and the front plate 123 may be a thin plate made of a composite material in which one or more of carbon, stainless steel, copper, and carbon tool steel are mixed. Carbon tool steel that can be used for the front plate 123 may be one of SK1, SK2, SK3, SK4, SK5, SK6, and SK7. In order to increase the surface hardness of the front plate 123, post-treatment may be performed on the above material. For example, heat treatment, PVD, DLC, or the like may be performed on the material. By using the above material and thickness, the front plate 123 may return to its original state while maintaining bendability. In addition, since the front plate 123 transmits radiation, the front plate 123 may have little effect on a radiation image. In addition, the front plate 123 may secure strength adequate for protecting the radiation detection panel 110. Due to the material and thickness of the front plate 123 as described above, at least one of the optimal bendability, restorability, and radiation transmittance of the front plate 123 can be secured, which has been experimentally demonstrated.

In addition, by minimizing the combination or contact between the front plate 123 and the radiation detection panel 110, damage to the radiation detection panel 110 caused by the front plate 123 can be minimized. This is because, since the front plate 123 may come into contact with and approach a subject to receive a large external force, but such an external force is not transmitted to the radiation detection panel 110 through the front plate 123, damage to the radiation detection panel 110 can be minimized.

Referring again to FIG. 2, the radiation detector 100 may include at least one component of a pixel array, a readout signal unit, a gate driver circuit unit, and the control board 210. The radiation detector 100 may include a light-receiving element that detects radiation (X-rays) and generates an electric signal, and a readout circuit unit that reads the generated electric signal. The readout signal unit may be implemented as a plurality of readout integrated circuits (ROICs) having a film form, and each ROIC may be coupled to the control board 210 through a connector. The readout circuit unit may be included in the radiation detection panel 110. The controller may process an electrical signal output from the readout circuit unit and then may generate X-ray image data constituting an X-ray image. The generated X-ray image data may be stored in a memory together with (or separately from) detector state information or information related to X-ray imaging. At least one of the controller and the memory may be included in the control board 210.

In addition, the control board 210 may include at least one of a power supply for supplying power to a detector and a communicator for communicating with an external device in a wired or wireless manner. In addition, the control board 210 may include a sensor unit for determining one of a position and an attitude of the detector.

In order for the radiation detector 100 to sequentially perform an operation of detecting X-ray information and an operation of transmitting the detected X-ray information to an external computer, the radiation detector 100 may use a power and data cable that transmits electric power (or power) and also performs data communication.

In addition, the control board 210 of the radiation detector 100 may use WiFi and Gigabit Ethernet for wired and wireless data transmission. In addition, the controller of the radiation detector 100 may be coupled to communicate with a workstation for variables for driving an image sensor or the like.

As described with reference to FIG. 2, at least one combination of the radiation detection panel 110, the main plate 121, the conductive gasket 122, the front plate 123, the control board bracket 220, and the control board 210 may be referred to as a core module 230 for a detector. Hereinafter, components for further improving the waterproof performance of the radiation detector 100 will be described.

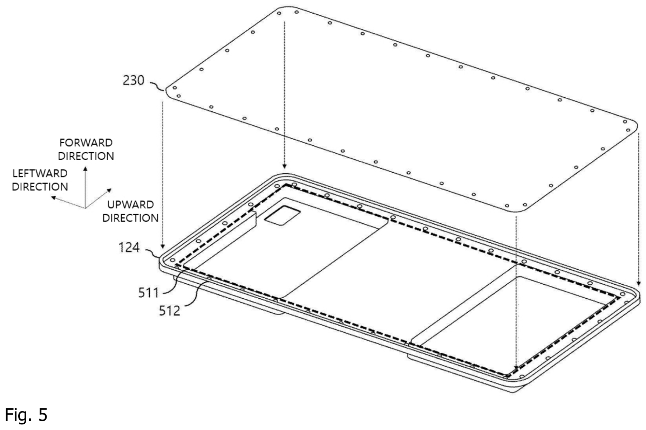

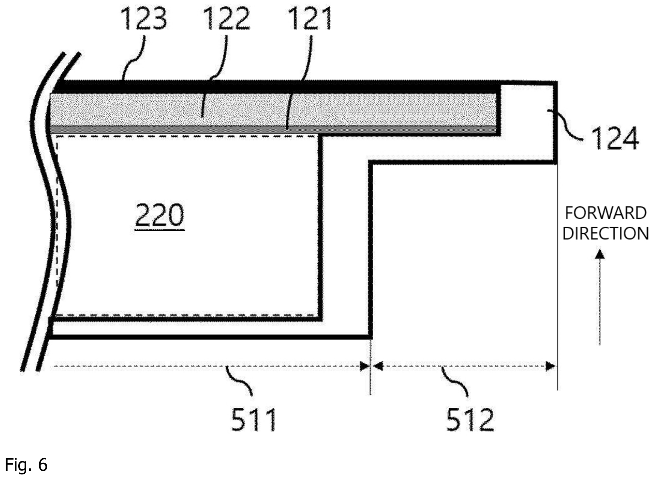

FIG. 5 is a view illustrating a part of the radiation detector according to one embodiment of the present disclosure. FIG. 6 is a cross-sectional view of a part of the radiation detector according to one embodiment of the present disclosure.

Referring to FIGS. 5 and 6, the radiation detector 100 may include the rear elastic jacket 124. The rear elastic jacket 124 may cover at least one of at least a portion of the rear surface of the main plate 121, at least a portion of the side surface of the main plate 121, the side surface of the conductive gasket, the side surface of the front plate, and the control board bracket in the core module 230 for a detector. In addition, the rear elastic jacket 124 may be made of an elastic material. For example, the rear elastic jacket 124 may be implemented with at least one material of rubber, silicone, and urethane.

Referring to FIG. 5, the rear elastic jacket 124 may include a control board accommodation portion 511. The control board accommodation portion 511 may have a concave shape to accommodate and protect the control board bracket 220. The control board accommodation portion 511 may also accommodate the control board 210.

The rear elastic jacket 124 may include a side protrusion 512. The side protrusion 512 may be the remaining portion of the rear elastic jacket 124 excluding the control board accommodation portion 511. The side protrusion 512 may be formed along an edge of the rear elastic jacket 124. The side protrusion 512 may include a component protruding forward to protect at least a portion of a side surface of the main plate 121, a side surface of the conductive gasket 122, and a side surface of the front plate 123.

Referring to FIG. 6, in a direction from the rear to the front, the control board bracket 220, the main plate 121, the conductive gasket 122, and the front plate 123 may be located. When the rear elastic jacket 124 is not present, at least a portion of a rear surface or at least a portion of the side surface of each of the control board bracket 220, the main plate 121, the conductive gasket 122, and the front plate 123 is exposed. The rear elastic jacket 124 may surround at least a portion of the rear surface or at least a portion of the side surface of each of the control board bracket 220, the main plate 121, the conductive gasket 122, and the front plate 123. For example, the control board accommodation portion 511 included in the rear elastic jacket 124 may surround the rear surface and the side surface of the control board bracket 220. In addition, the side protrusion 512 included in the rear elastic jacket 124 may surround at least a portion of the rear surface or at least a portion of each of the side surface of the main plate 121, the conductive gasket 122, and the front plate 123. Referring to FIG. 6, a front surface of the front plate 123 may be exposed to the outside.

In addition, the rear elastic jacket 124 may not be bonded to at least a portion of the rear surface or at least a portion of the side surface of each of the main plate 121, the conductive gasket 122, and the front plate 123 through an adhesive. This is to facilitate bending of the radiation detector 100.

In this way, the rear elastic jacket 124 may be a component for protecting at least one of the rear surface and the side surface of the core module 230 for a detector. In addition, the rear elastic jacket 124 may prevent foreign materials from being introduced from at least one of the rear surface and the side surface of the core module 230 for a detector. The rear elastic jacket 124 may have a thickness of 0.5 T to 3.0 T. When the thickness of the rear elastic jacket 124 is 0.5 T or less, the rear elastic jacket 124 may be easily torn during bending. In addition, when the thickness of the rear elastic jacket 124 is 3 T or more, bending may not be smoothly, performed, and also when bending is forcibly performed, there may be a risk of deformation of other portions (wrinkling or stretching or foreign material introduction due to deformation of portions for maintaining airtightness) in order to secure an increased length value.

Hereinafter, a structure in which the rear elastic jacket 124, the main plate 121, the conductive gasket 122, and the front plate 123 are fixed will be described in more detail.

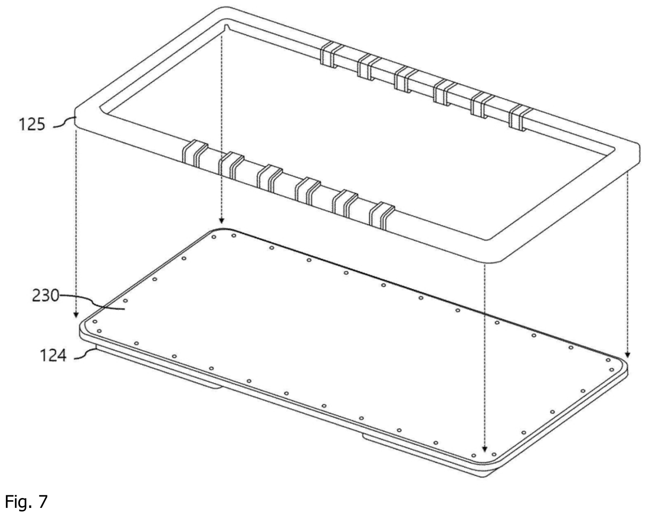

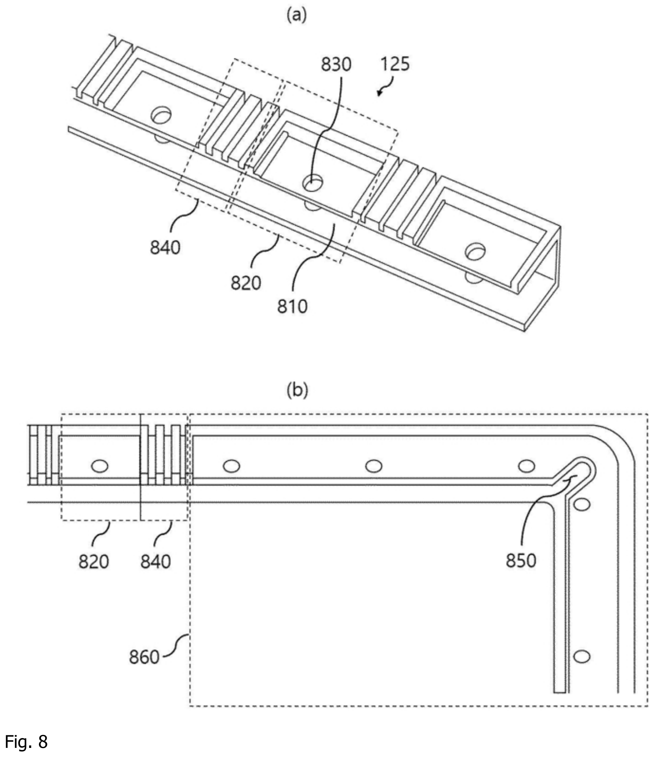

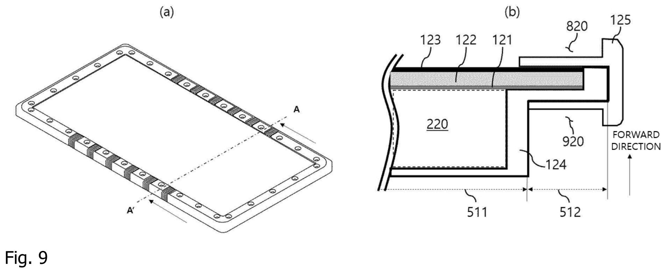

FIG. 7 illustrates a part of the radiation detector according to one embodiment of the present disclosure. FIG. 8 illustrates the side elastic jacket according to one embodiment of the present disclosure. In addition, FIG. 9 illustrates a cross section of a part of the radiation detector according to one embodiment of the present disclosure.

Referring to FIG. 7, the radiation detector 100 may further include the side elastic jacket 125. FIG. 7 illustrates a process of coupling the side elastic jacket 125 to the core module 230 for a detector to which the rear elastic jacket 124 is coupled.

Referring to FIGS. 7 and 9, the side elastic jacket 125 may be formed along the side protrusion 512 of the rear elastic jacket 124 to surround the side protrusion 512 formed on the side surface of the rear elastic jacket 124.

FIG. 8A is a perspective view illustrating a part of the side elastic jacket 125. Referring to FIG. 8A, an inner surface of the side elastic jacket 125 may include a side protection recess 810 for inserting the side protrusion 512. The side protection recess 810 may be formed along the side elastic jacket 125. The side protection recess 810 may be formed between a front portion and a rear portion of the side elastic jacket 125. The front portion is one surface located on a front surface of the side protection recess 810, and the rear portion is the other surface located on a rear surface of the side protection recess 810. The front portion may be substantially parallel to the rear portion. The front portion and the rear portion may be connected through a side portion. A cross section of the side elastic jacket 125 may have a "C" shape or a laterally inverted "C" shape by a front portion, a rear portion, and a side portion forming the side protection recess 810.

FIG. 8B is a front view illustrating a part of the side elastic jacket 125. Referring to FIG. 8B, cut lines 850 formed diagonally may be formed at corner portions of the side elastic jacket 125. More specifically, an upper left corner, a lower left corner, a lower right corner, and an upper right corner of the side elastic jacket 125 may include the cut lines 850 to assist in coupling with the side protrusion 512 of the rear elastic jacket 124. Due to the cut line 850, the side elastic jacket 125 may be easily coupled to the core module 230 for a detector to which the rear elastic jacket 124 is coupled.

Referring to FIG. 8A, the side elastic jacket 125 may include a front recess 820. More specifically, the front recess 820 may be formed in a front surface of the front portion of the side elastic jacket 125. The front recess 820 may be a component for inserting a front base bracket 1010 into a front surface of the side elastic jacket 125. The front base bracket 1010 is a component for fixing the side elastic jacket 125 to the core module 230 for a detector to reinforce waterproofing of the radiation detector 100. A size of the front recess 820 may be the same as a size of the front base bracket 1010.

Referring to FIG. 8A, at least one bending groove 840 extending vertically may be formed between a plurality of front recesses 820. The bending groove 840 may be a component for assisting the radiation detector 100 in bending about a vertically extending axis.

Referring to FIG. 8A, the side elastic jacket 125 may include a rear recess 920. More specifically, the rear recess 920 may be formed in a rear surface of the rear portion of the side elastic jacket 125. The rear recess 920 may be a component for inserting a rear base bracket 1020 into a rear surface of the side elastic jacket 125. The rear base bracket 1020 may be a component for fixing the side elastic jacket 125 to the core module 230 for a detector to reinforce waterproofing of the radiation detector 100. A size of the rear recess 920 may be the same as a size of the rear base bracket 1020.

At least one bending groove extending vertically may be formed between a plurality of rear recesses 920. The bending groove may be a component for assisting the radiation detector 100 in bending about a vertically extending axis.

A screw hole 830 may be formed in the front recess 820. In addition, a screw hole may also be formed in the rear recess 920. The front base bracket 1010 may be inserted into the front recess 820, and the rear base bracket 1020 may be inserted into the rear recess. In addition, at least one of the front base bracket 1010, the side elastic jacket 125, the front plate 123, the conductive gasket 122, the main plate 121, the rear elastic jacket 124, and the rear base bracket may be screw-connected. More specifically, at least one of the front base bracket 1010, the front portion of the side elastic jacket 125, the front plate 123, the conductive gasket 122, the main plate 121, the side protrusion 512 of the rear elastic jacket 124, the rear portion of the side elastic jacket 125, and the rear base bracket may be screw-coupled in the stated order.

FIG. 9A illustrates a position for indicating a cross section. FIG. 9B illustrates a cross section at the position shown in FIG. 9A. More specifically, FIG. 9B illustrates a cross section at a position at which the front recess 820 and the rear recess 920 are formed. In the description with reference to FIG. 9B, portions described above with reference to FIG. 6 will be omitted.

Referring to FIG. 9B, the side elastic jacket 125 may be formed along the side protrusion 512 of the rear elastic jacket 124 to surround the side protrusion 512 formed on the side surface of the rear elastic jacket 124.

After the side elastic jacket 125 is coupled, the front portion of the side elastic jacket 125, the front plate 123, the conductive gasket 122, the main plate 121, the rear elastic jacket 124, and the rear portion of the side elastic jacket 125 may be disposed in a direction from the front to the rear in an area of the side protrusion 512 of the rear elastic jacket 124. In addition, the front recess 820 may be formed in the front portion of the side elastic jacket 125. In addition, the rear recess 920 may be formed in the rear portion of the side elastic jacket 125.

In addition, the side elastic jacket 125 may be made of an elastic material. For example, the side elastic jacket 125 may be implemented with at least one material of rubber, silicone, and urethane. The side elastic jacket 125 may have a thickness of 0.5 T to 3.0 T. When the thickness of the side elastic jacket 125 is 0.5 T or less, the side elastic jacket 125 may be easily torn during bending. In addition, when the thickness of the side elastic jacket 125 is 3 T or more, bending may not be smoothly, performed, and also when bending is forcibly performed, there may be a risk of deformation of other portions (wrinkling or stretching or foreign material introduction due to deformation of portions for maintaining airtightness) in order to secure an increased length value. Therefore, it is advantageous to implement the side elastic jacket 125 to have a thickness of 0.5 T to 3.0 T, which has been proven through experiments.

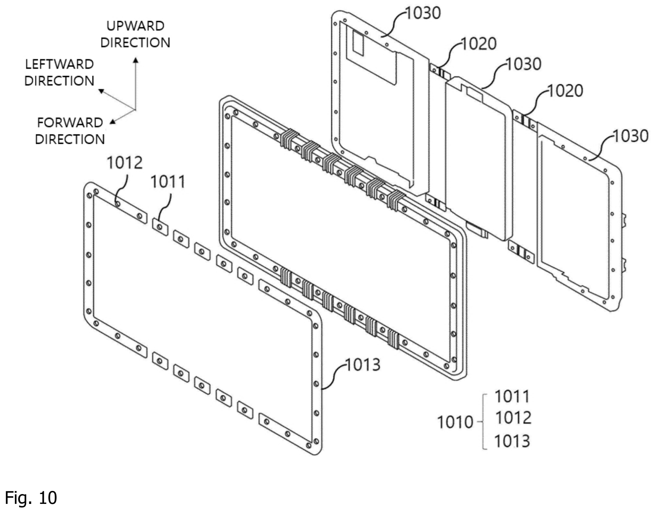

FIG. 10 is a view for describing the radiation detector according to one embodiment of the present disclosure.

FIG. 10 is a view for describing a process of coupling at least one of the front base bracket 1010, the rear base bracket 1020, and a rear base module 1030 after coupling the side elastic jacket 125 to the radiation detector 100 as described in FIGS. 7 to 9.

At least one of the front base bracket 1010 and the rear base bracket 1020 may have lower elasticity than the materials of the side elastic jacket 125 and the rear elastic jacket 124. For example, the front base bracket 1010 and the rear base bracket 1020 may be made of a metal or plastic. However, the present disclosure is not limited thereto, and various materials having lower elasticity than the materials of the side elastic jacket 125 and the rear elastic jacket 124 may be used as the materials of the front base bracket 1010 and the rear base bracket 1020. In this way, since at least one of the front base bracket 1010 and the rear base bracket 1020 has lower elasticity than the materials of the side elastic jacket 125 and the rear elastic jacket 124, when the front base bracket 1010 and the rear base bracket 1020 are coupled to the side elastic jacket 125 and the rear elastic jacket 124, there is an effect in which the side elastic jacket 125 and the rear elastic jacket 124 are pressed over an area corresponding to the front base bracket 1010 and the rear base bracket 1020.

Since an area of each of the front base bracket 1010 and the rear base bracket 1020 is greater than an area of a screw for coupling, the front base bracket 1010 and the rear base bracket 1020 have an effect of pressing a wider area as compared to when only the screw is used. Therefore, the front base bracket 1010 and the rear base bracket 1020 of the radiation detector 100 of the present disclosure may firmly fix the side elastic jacket 125 and the rear elastic jacket 124 to the radiation detector 100. In addition, the side elastic jacket 125 and the rear elastic jacket 124 may not be crushed or torn by the front base bracket 1010 and the rear base bracket 1020. Accordingly, the waterproof performance of the radiation detector 100 can be improved, and the durability thereof can also be improved.

Unlike that shown in FIG. 10, the front base bracket 1010 may be formed integrally. That is, the front base bracket 1010 may have a closed curve shape. The front base bracket 1010 may be formed along the side elastic jacket 125. However, the present disclosure is not limited thereto. The front base bracket 1010 may be divided into a plurality of pieces. The front base bracket 1010 may include a left front base bracket 1012, a right front base bracket 1013, and a plurality of central front base brackets 1011.

The left front base bracket 1012 may be coupled to a left side of the front surface of the side elastic jacket 125 and may have a "C" shape (or a ⊂ shape) when viewed from the front. The right front base bracket 1013 may be coupled to a right side of the front surface of the side elastic jacket 125 and may have a laterally inverted "C" shape. The plurality of central front base brackets 1011 may be coupled to the front surface of the side elastic jacket 125. The plurality of central front base brackets 1011 may be disposed between the left front base bracket 1012 and the right front base bracket 1013. The plurality of central front base brackets 1011 may be disposed in parallel along the side elastic jacket 125. The plurality of central front base brackets 1011 may be formed along edges of the side elastic jacket 125 and the front plate 123.

Referring briefly to FIG. 8A, the front recess 820 in a central region included in the side elastic jacket 125 may have a shape corresponding to the central front base bracket 1011. In addition, referring to FIG. 8B, a right front recess 860 included in the side elastic jacket 125 may have a shape corresponding to the right front base bracket 1013. In addition, although not shown, a left front recess included in the side elastic jacket 125 may have a shape corresponding to the left front base bracket 1012.

The left front base bracket 1012, the right front base bracket 1013, and the plurality of central front base brackets 1011 may be inserted into the front recesses 820 and 860. That is, the central front base bracket 1011 may be inserted into the front recess 820 in a central region included in the side elastic jacket 125. In addition, referring to FIG. 8B, the right front base bracket 1013 may be inserted into the right front recess 860 included in the side elastic jacket 125. In addition, although not shown, the left front base bracket 1012 may be inserted into the left front recess included in the side elastic jacket 125.

Referring to FIG. 8, at least one bending groove 840 extending vertically may be formed between a plurality of front recesses 820 in a central region corresponding to the plurality of central front base brackets 1011. At least one bending groove extending vertically may be formed between the plurality of rear recesses 920. The bending groove 840 may be a component for assisting the radiation detector 100 in bending about a vertically extending axis.

The radiation detector 100 may include the rear base module 1030. The rear base module 1030 may be located on a rear surface of the rear elastic jacket 124. The rear base module 1030 may be a component for protecting the control board 210 inside the control board bracket 220. As described above, the rear elastic jacket 124 may be made of an elastic material. The rear elastic jacket 124 may support bending of the radiation detector 100 and provide waterproofing but may not sufficiently protect the control board 210. Therefore, the rear base module 1030 may be implemented with a rigid material to protect the control board 210. For example, the rear base module 1030 may be made of plastic, a metal, or the like. The rear base module 1030 may be implemented as a plurality of pieces to support bending of the radiation detector 100. The rear base bracket 1020 may be located between a plurality of rear base modules 1030. An area of the plurality of rear base modules 1030 and an area of the rear base bracket 1020 may not overlap each other in a lateral direction. Accordingly, bending of the radiation detector 100 may be supported based on at least one of the rear base module 1030 and the rear base bracket 1020 which are divided into a plurality of pieces.

The radiation detector 100 may include both the rear base module 1030 and the rear base bracket 1020. However, the present disclosure is not limited thereto, and the radiation detector 100 may include only one of the rear base module 1030 and the rear base bracket 1020.

The rear base module 1030 may have lower elasticity than the materials of the side elastic jacket 125 and the rear elastic jacket 124. For example, the rear base module 1030 may be made of a metal or plastic. However, the present disclosure is not limited thereto, and various materials having lower elasticity than the materials of the side elastic jacket 125 and the rear elastic jacket 124 may be used as the material of the rear base module 1030. In this way, since the rear base module 1030 has lower elasticity than the material of the side elastic jacket 125 and the rear elastic jacket 124, when the rear base module 1030 is coupled to the side elastic jacket 125 and the rear elastic jacket 124, there is an effect in which the side elastic jacket 125 and the rear elastic jacket 124 are pressed over an area corresponding the rear base module 1030.

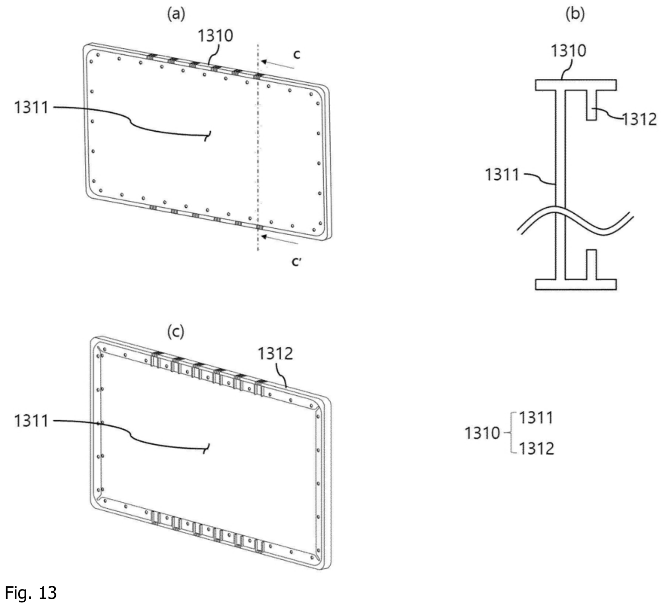

Since an area of the rear base module 1030 is greater than an area of a screw for coupling, the rear base module 1030 has an effect of pressing a wider area as compared to when only the screw is used. Therefore, the rear base module 1030 of the radiation detector 100 may firmly fix the side elastic jacket 125 and the rear elastic jacket 124 to the radiation detector 100. In addition, the side elastic jacket 125 and the rear elastic jacket 124 may not be crushed or torn by the rear base module 1030. Accordingly, the waterproof performance of the radiation detector 100 can be improved, and the durability thereof can also be improved. For a description of various embodiments of the side elastic jacket 125, reference is made to FIG. 13.

FIG. 13 shows views illustrating a side elastic jacket according to one embodiment of the present disclosure.

FIG. 13A is a perspective view of a side elastic jacket 1310. In addition, FIG. 13B is a cross-sectional view of the side elastic jacket 1310 along line A-A' of the side elastic jacket of FIG. 13A. FIG. 13B is a cross-sectional view of the side elastic jacket 1310 along line C-C' of FIG. 13A. FIG. 13C illustrates a rear surface of the side elastic jacket 1310 of FIG. 13A.

Referring to FIG. 13, the side elastic jacket 1310 may have a different shape from that shown in FIGS. 7 to 9. More specifically, the side elastic jacket 1310 may have a shape that completely covers at least one of a front surface and a rear surface of the core module 230. The side elastic jacket 1310 may include at least one of a front cover 1311 and a rear cover 1312.

According to one embodiment of the present disclosure, the side elastic jacket 1310 may cover the front surface of the core module 230. FIG. 13A illustrates the side elastic jacket 1310 viewed from the front and illustrates a front surface of the front cover 1311. The side elastic jacket 1310 may be formed integrally and may include the front cover 1311. The front cover 1311 of the side elastic jacket 1310 may be in contact with at least a portion of the core module 230. The front cover 1311 of the side elastic jacket 1310 may be in contact with at least one of the radiation detection panel 110, the main plate 121, the conductive gasket 122, and the front plate 123. A rear surface of the front cover 1311 of the side elastic jacket 1310 may be in contact with a front surface of at least one of the radiation detection panel 110, the main plate 121, the conductive gasket 122, and the front plate 123 of the core module 230.

Referring to FIGS. 13B and 13C, the rear cover 1312 of the side elastic jacket 1310 may cover at least a portion of the rear surface of the core module 230. For example, the rear cover 1312 of the side elastic jacket 1310 may be formed along an edge of the rear surface of the core module 230. Since the rear cover 1312 is formed along the edge of the rear surface of the core module 230, the rear surface of the front cover 1311 can be seen in FIG. 13C when illustrates the side elastic jacket 1310 viewed from the rear.

However, the present disclosure is not limited to what is shown in FIG. 13, and embodiments other than that shown in FIG. 13 are also possible. The side elastic jacket 1310 may cover the entire rear surface of the core module 230. The side elastic jacket 1310 may be formed integrally and may include a rear cover (not shown). The rear cover of the side elastic jacket 1310 may be in contact with at least a portion of the core module 230. The rear cover of the side elastic jacket 1310 may be in contact with at least one of the radiation detection panel 110, the main plate 121, the conductive gasket 122, and the front plate 123. A front surface of the rear cover of the side elastic jacket 1310 may be in contact with a rear surface of at least one of the radiation detection panel 110, the main plate 121, the conductive gasket 122, the front plate 123, the control board bracket 220, and the control board 210 of the core module 230. In addition, the front cover may be formed along an edge of the core module 230 to cover at least a portion of the front surface of the core module 230.

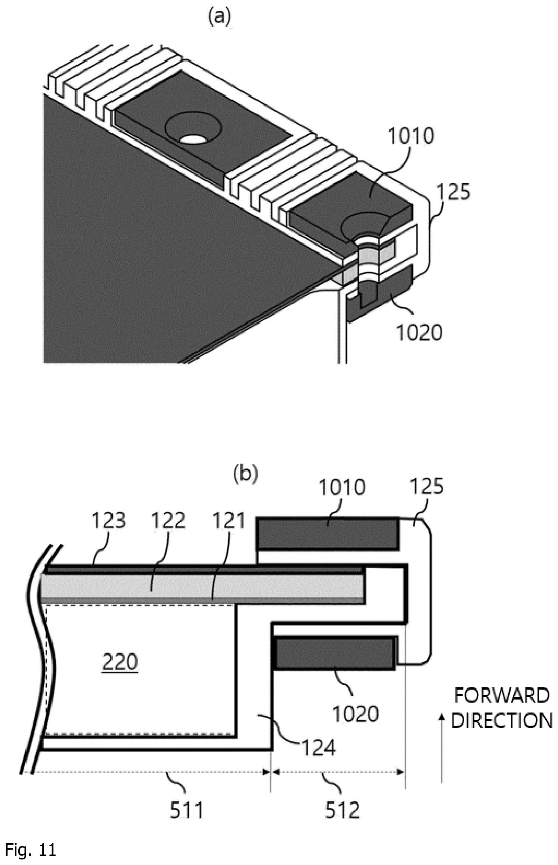

The side elastic jacket 1310 including at least one of the front cover 1311 and the rear cover may prevent foreign materials from being introduced through at least one of front and rear surfaces of the side elastic jacket 1310. In this way, since the side elastic jacket 1310 includes at least one of the front cover 1311 and the rear cover, the side elastic jacket 1310 can strongly prevent foreign materials from being introduced into the core module 230 inside the side elastic jacket 1310. In addition, the side elastic jacket 1310 can improve a waterproof function of the radiation detector 100. FIG. 11 is a cross-sectional view of the radiation detector according to one embodiment of the present disclosure.

Referring to FIG. 11A, a screw hole may also be formed in the front base bracket 1010. Referring to FIG. 11B, at least one of the front base bracket 1010, the side elastic jacket 125, the conductive gasket 122, the rear elastic jacket 124, and the rear base bracket 1020 may be screw-connected. More specifically, in an area of the side protrusion 512, at least one of the front base bracket 1010, the front portion of the side elastic jacket 125, the front plate 123, the conductive gasket 122, the main plate 121, the side protrusion 512 of the rear elastic jacket 124, the rear portion of the side elastic jacket 125, and the rear base bracket 1020 may be located in a direction from the front to the rear in the stated order and screw-coupled. The use of an additional washer during screw coupling may prevent loosening of a screw and may enhance a fixing force. For example, a washer may be located between two adjacent components of the front base bracket 1010, the front portion of the side elastic jacket 125, the front plate 123, the conductive gasket 122, the main plate 121, the side protrusion 512 of the rear elastic jacket 124, the rear portion of the side elastic jacket 125, and the rear base bracket 1020, may be located on a front surface of the front base bracket 1010, or may be located on a rear surface of the rear base bracket 1020.

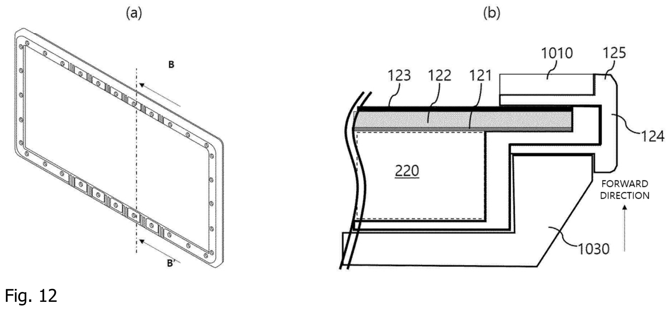

FIG. 12 is a cross-sectional view of the radiation detector according to one embodiment of the present disclosure.

FIG. 12 illustrates a state in which the rear base module 1030 is coupled instead of the rear base bracket 1020.

FIG. 12A illustrates a position for indicating a cross section. FIG. 12B illustrates a cross section at position B-B' shown in FIG. 12A. More specifically, FIG. 12B illustrates a cross section at a position at which the front base bracket 1010 and the rear base module 1030 are shown.

Referring to FIG. 12B, at least one of the front base bracket 1010, the side elastic jacket 125, the conductive gasket 122, the rear elastic jacket 124, and the rear base module 1030 may be screw-connected. More specifically, at least one of the front base bracket 1010, the front portion of the side elastic jacket 125, the front plate 123, the conductive gasket 122, the main plate 121, the side protrusion 512 of the rear elastic jacket 124, the rear portion of the side elastic jacket 125, and the rear base module 1030 may be located in a direction of from the front to the rear in the stated order and screw-coupled. The use of an additional washer during screw coupling may prevent loosening of a screw and may enhance a fixing force. For example, a washer may be located between two adjacent components among the front base bracket 1010, the front portion of the side elastic jacket 125, the front plate 123, the conductive gasket 122, the main plate 121, the side protrusion 512 of the rear elastic jacket 124, the rear portion of the side elastic jacket 125, and the rear base module 1030, may be located on the front surface of the front base bracket 1010, or may be located on a rear surface of the rear base module 1030.

The radiation detector 100 of the present disclosure may be bendable while supporting waterproofing through a structure described above. In addition, various components included in the radiation detector 100 protect the radiation detection panel 110, thereby generating a high-durability and high-quality radiation image.

Various embodiments have been described above. It will be understood by those skilled in the art that the present disclosure may be embodied in various other forms without departing from the essential characteristics of the present disclosure. Therefore, the disclosed embodiments should be considered to be illustrative rather than a restrictive sense. The scope of the present disclosure is defined by the appended claims rather than by the foregoing description, and all differences within the scope of equivalents thereof should be construed as being included in the present disclosure.

Meanwhile, the embodiments of the present disclosure described above may be written as a program that is executable on a computer and may be implemented in a general-purpose digital computer that operates the program using a computer-readable recording medium. Examples of the computer-readable recording medium media include storage media such as magnetic recording media (for example, a ROM, a floppy disk, and a hard disk) and optical readable media (for example, compact disc read-only memory (CD-ROM) and a digital video disc (DVD)).

## Claims

1. A radiation detector which is bendable, detects radiation, and has a waterproof structure, the radiation detector comprising:
a main plate which supports a radiation detection panel and has a conductive plate shape;
the radiation detection panel of which at least a portion is bonded to at least a portion of a front surface of the main plate and which detects radiation incident onto a front surface of the radiation detection panel;
a conductive gasket attached to at least a portion of the front surface of the main plate, disposed along a side surface of the radiation detection panel, and electrically coupled to the main plate; and
a front plate bonded to a front surface of the conductive gasket, electrically coupled to the conductive gasket, and covering the front surface of the radiation detection panel,
wherein the main plate, the radiation detection panel, the conductive gasket, and the front plate are flexible.

2. The radiation detector of claim 1, wherein the main plate includes a cable through-hole which is a connection path for a detector cable to connect the radiation detection panel and the control board,
a control board bracket coupling the control board is coupled to a rear surface of the main plate,
one end portion of the detector cable is coupled to the radiation detection panel,
the detector cable passes through the cable through-hole, and
the other end portion of the detector cable is coupled to the control board accommodated inside the control board bracket.

3. The radiation detector of claim 2, comprising a rear elastic jacket which has elasticity and covers at least one of at least a portion of the rear surface of the main plate, at least a portion of a side surface of the main plate, a side surface of the conductive gasket, a side surface of the front plate, and the control board bracket.

4. The radiation detector of claim 3, comprising a side elastic jacket formed along a side protrusion of the rear elastic jacket to cover the side protrusion formed on a side surface of the rear elastic jacket,
wherein an inner surface of the side elastic jacket includes a side protection recess for inserting the side protrusion.

5. The radiation detector of claim 4, wherein the side elastic jacket includes front recesses, into which a front base bracket is inserted, formed in a front surface of the side elastic jacket, and a rear recess, into which a rear base bracket is inserted, formed in a rear surface of the side elastic jacket,
the front base bracket is inserted into the front recess,
the rear base bracket is inserted into the rear recess, and
at least one of the front base bracket, the side elastic jacket, the front plate, the conductive gasket, the main plate, the rear elastic jacket, and the rear base bracket is screw-connected.

6. The radiation detector of claim 5, comprising a rear base module located on a rear surface of the rear elastic jacket and protecting the control board inside the control board bracket,
wherein at least one of the front base bracket, the side elastic jacket, the conductive gasket, the rear elastic jacket, and the rear base module is screw-connected.

7. The radiation detector of claim 5, wherein the front base bracket includes:
a left front base bracket coupled to a left side of the front surface of the side elastic jacket and having a "C" shape;
a right front base bracket coupled to a right side of the front surface of the side elastic jacket and having a laterally inverted "C" shape; and
a plurality of central front base brackets coupled to the front surface of the side elastic jacket and located between the left front base bracket and the right front base bracket.

8. The radiation detector of claim 7, wherein the left front base bracket, the right front base bracket, and the plurality of central front base brackets are inserted into the front recesses, and
at least one bending groove extending vertically is formed between the plurality of front recesses in a central region corresponding to the plurality of central front base brackets.

9. The radiation detector of claim 3, wherein the rear elastic jacket includes:
a control board accommodation portion which has a concave shape and accommodates and protects the control board bracket; and
a side protrusion formed along an edge of the rear elastic jacket to protect at least a portion of the side surface of the main plate, the side surface of the conductive gasket, and the side surface of the front plate.

10. The radiation detector of claim 4, wherein the rear elastic jacket and the side elastic jacket each have a thickness of 0.5 T to 3.0 T.

11. The radiation detector of claim 4, wherein the side elastic jacket is formed integrally and includes at least one of a front cover and a rear cover, and
the side elastic jacket including the at least one of the front cover and the rear cover prevents foreign materials from being introduced through at least one of a front surface and a rear surface of the side elastic jacket.
